(19) Europäisches Patentamt

European Patent Office

Office européen des brevets

(11) **EP 1 601 132 B1**

(12) **EUROPEAN PATENT SPECIFICATION**

(45) Date of publication and mention
of the grant of the patent:
**15.11.2006 Bulletin 2006/46**

(51) Int Cl.:
***H04L 9/06*** *(2006.01)*

(21) Application number: **04102252.6**

(22) Date of filing: **24.05.2004**

(54) **Table Masking for Resistance to Power Analysis Attacks**

Tabellenmaskierung zur Beständigkeit gegen Angriffe durch Analyse der Leistungsaufnahme.

Masquage de table pour résister aux attaques par analyse de puissance

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(43) Date of publication of application:
**30.11.2005 Bulletin 2005/48**

(73) Proprietor: **Research In Motion Limited
Waterloo, Ontario N2L 3W8 (CA)**

(72) Inventor: **Gebotys, Catherine Helen
Waterloo
Ontario N2K 3L4 (CA)**

(74) Representative: **Rickard, David John et al
26 Mallinson Road
London SW11 1BP (GB)**

(56) References cited:
**EP-A- 0 981 223        EP-A- 1 267 514
US-A1- 2004 028 224        US-B1- 6 295 606**

**Description**

This invention relates generally to computing systems and, more particularly, to computing systems implementing encryption operations and countermeasures to resist power analysis attacks on such operations.

Computing systems often require operations to be carried out in a secure manner. For embedded computing devices and for pervasive systems, security of operation is often crucial. To ensure operations and communications are secure, such systems employ cryptographic methods.

The implementation of such a cryptographic method must itself be secure. However, cryptographic methods are subject to attacks. One type of non-invasive attack on computing devices implementing cryptographic methods is known as a power analysis attack. A power analysis attack involves the monitoring of the power consumption of one or more components of a device while the device executes a cryptographic method.

The data derived from monitoring power consumption of the device, combined with knowledge of the operations being carried out by the device, are used to derive the secret information that is part of the cryptographic method.

One type of power analysis attack is known as a Differential Power Analysis ("DPA") (see, for example, "Differential Power Analysis" P. Kocher, CRYPTO'99, Lecture Notes in Computer Science, 1666, pp. 388-397, 1999, Springer-Verlag). This approach involves generating a large number of inputs by varying different bits in values to be encoded using the cryptographic method implemented in a device. The DPA attack monitors power consumption at different points in a computing device for each of these varying values and, by statistical analysis, the differential data is used to determine a likely key value for the cryptographic method (the secret information).

The DPA attack often targets the output of Substitution tables (also referred to as substitution boxes or "S-boxes") that are common in cryptographic algorithms and are often implemented as look up tables. An S-box is typically indexed by a combination of key bits and plaintext. In carrying out an attack to determine a key value used in a cryptographic system, an attacker controls the plaintext values and makes guesses at the key bits. Based on these guesses, computations are performed on the acquired power traces to form a set of DPA data. The DPA data with the largest peak value is used to determine which of the key bit guesses was likely correct.

There are several known countermeasures for this S-box DPA attack. Messerges 2000 ("Securing the AES Finalists Against Power Analysis Attacks" T. Messerges, FSE 2000, Lecture Notes in Computer Science, 1978, pp. 150-164, 2001, Springer-Verlag) identifies a method of frequently regenerating tables with a different random output mask within the cryptographic algorithm. However, such an approach includes a potentially large overhead cost for each regeneration step. To improve the latency overhead required to regenerate the tables, Itoh 2001 ("DPA countermeasure based on the 'masking method'" K.Itoh et al. , ICICS 2001, Lecture Notes in Computer Science, 2288, pp. 440-456, 2001, Springer-Verlag) suggests using a fixed number of fixed values to mask the substitution tables. Different substitution tables may be pre-defined and the different tables used at different times in the cryptographic system. However, since the mask values for each such table do not change in the Itoh approach, there is a threat that over time an attacker may determine the mask values used. Further, there is a potential for an attacker to obtain information by using simple power analysis to identify when the masked table is changed.

A further approach involves the duplication method described in Patarin (US Patent 6,658,569, Patarin et al., "Secret key cryptographic process for protecting a computer system against attacks by physical analysis") that targets secret sharing schemes where multiple inputs to the S-box are supported. The multiple inputs to the table are transformed into a variable $v$. Additionally two table outputs are produced one which is a random transformation on the input, $A(v)$, and another which is $A(v)$ exclusive-or'd with $S(v)$. However, since the random transformation on $v$ does not change in the Patarin approach, there is a threat that over time an attacker may determine the random transformation used. Furthermore, since $A(v)$ is output from the table, there is a potential for an attacker to obtain information by using second order power analysis (using power samples of $A(v)$ and $A(v)$ exclusive-or'd with $S(v)$) to obtain a correct key guess.

US2004/0028224 discloses a method of cyphering and/or de-cyphering, by an integrated circuit, a digital input code by means of several keys. The method consists of dividing the code into several data blocks of same dimensions and applying to said blocks several turns of a cyphering or de-cyphering consisting of submitting each block to at least one same non-linear transformation. The method includes subsequently combining each block with a different key at each turn, the operands being masked, upon execution of the method, by means of at least one first random number having the size of said code and all the blocks of which have the same value by combining, by an XOR type function, the input and output blocks of the non-linear transformation with said random number.

It is therefore desirable to be able to implement masking countermeasures that will resist a DPA attack using mask values and that will not require repeated power consuming table regenerations.

According to an aspect of this invention there is provided an improved countermeasure for a cryptographic process or system.

According to a further aspect of this invention, there is provided a method and system for individually defining random values to be used for masks of entries in substitution tables used in a cryptographic operation to define masked substitution tables. Corresponding mask tables are defined to permit an effective masking of output values in cryptographic operations. In accordance with other aspects of the invention, such masked substitution tables and mask tables may be used in cryptographic operations carried out in accordance with the AES (Advanced Encryption Standard) and DES (Data Encryption Standard) approaches known to those in the art.

In accordance with another aspect of the invention there is provided a computing device-implemented method for obtaining one or more masked output values from cryptographic operations defined with reference to one or more substitution tables, the output values being equivalent to values masked with the fixed mask value m, the method including the steps of

individually generating a random value r[x] for each address x in the one or more substitution tables,

defining one or more masked substitution tables by masking each value in the substitution tables at address x with the corresponding value r[x],

defining one or more mask tables corresponding to the masked substitution tables such that each value at an address x, when masked with the corresponding value r[x], is equal to the fixed mask value m.

The method may include the step of individually generating random values $r_1[x]... r_{n-1}[x]$ for each address x in the one or more substitution tables and defining one or more sets of masked substitution tables $M_1 ... M_{n-1}$ to store the random values $r_1[x]... r_{n-1}[x]$, wherein the step of defining one or more mask tables comprises defining one or more mask tables $M_n$ having entries $r_n[x]$ corresponding to the masked substitution tables (11) such that $r_n[x] = m {}^\wedge r[x] {}^\wedge r_1[x] {}^\wedge ... {}^\wedge r_{n-1}[x]$.

The method may comprise a computing device-implemented method to mask table output values for an AES cryptographic operation, the method including carrying out first AES cryptographic steps on a set of masked substitution tables and carrying out second AES cryptographic steps on a set of mask tables, the values resulting from the first and the second AES cryptographic steps being combined to provide masked output values.

The method may include the steps of defining a set of masked substitution tables and a set of mask tables as set out in above and the method including carrying out first AES cryptographic steps on the set of masked substitution tables and carrying out second AES cryptographic steps on the set of mask tables, the values resulting from the first and the second AES cryptographic steps being combined to provide masked output values.

Alternatively, the method may comprise a computing device-implemented method to mask table output values for DES encryption operations, the method including the steps of carrying out a first set of DES cryptographic steps on a set of masked substitution tables and carrying out a second set of DES cryptographic steps a set of mask tables, intermediate results from steps in the first set and in the second set of DES cryptographic steps being masked with intermediate results of the corresponding step in the other set of DES cryptographic steps so as to be used as inputs for succeeding steps, the values resulting from the first and the second sets of DES cryptographic steps being combined to provide masked table output values.

The method may include the steps of defining a set of masked substitution tables and a set of mask tables as set out above and the method including the steps of carrying out a first set of DES cryptographic steps on a set of masked substitution tables and carrying out a second set of DES cryptographic steps a set of mask tables, intermediate results from steps in the first set and in the second set of DES cryptographic steps being masked with intermediate results of the corresponding step in the other set of DES cryptographic steps so as to be used as inputs for succeeding steps, the values resulting from the first and the second sets of DES cryptographic steps being combined to provide masked table output values.

The method may include the steps of dynamically regenerating each corresponding masked substitution table and mask table by, after a predetermined number of table entries are accessed, redefining each of the accessed entries in the corresponding tables by masking the entry in each of the tables with an individually generated random value.

The steps of defining the masked substitution tables and the mask tables may be carried out prior to a step of downloading program code for carrying out the further cryptographic steps.

In accordance with another aspect of the invention there is provided a system for obtaining one or more masked output values from cryptographic operations, using one or more of the above methods.

In accordance with another aspect of the invention there is provided a computing-device program product for obtaining one or more masked output values from cryptographic operations using one or more of the above methods.

Advantages of the invention include the software implementation of countermeasures for differential power analysis security attacks that require limited overhead costs in energy, performance and program code. Such limited overhead permits the use of this countermeasure approach with devices such as wireless hand-held communication devices where security is required for the operations carried out by the devices but in which constraints on power and processor performance are potential concerns.

Brief Description of the Drawings

In drawings which illustrate by way of example only a preferred embodiment of the invention,

Figure 1 is a block diagram showing tables in accordance with the preferred embodiment;

Figure 2 is a block diagram showing masking of table entries in accordance with the preferred embodiment;

Figure 3 is a block diagram showing a substitution table, a masked substitution table and a series of mask tables, in accordance with an implementation of the preferred embodiment;

Figure 4 is a block diagram showing masked substitution tables and mask tables used in an AES operation in accordance with the preferred embodiment;

Figure 5 is a block diagram showing masked substitution tables and mask tables used in an example round of a DES operation in accordance with the preferred embodiment;

Detailed Description

In different cryptographic operations implemented in computing devices, substitution tables are used. For example in AES and 3DES, multiple S-boxes are utilized in encryption of plaintext. To provide countermeasures for security attacks on such cryptographic operations the output of such substitution tables may be masked. The security provided by such a masking of the table output may, however, itself be subject to attack.

The preferred embodiment may be implemented as a computer program product that includes program code that operates to carry out the steps in the process described. The preferred embodiment may be implemented as a computer system (which includes a subsystem or system defined to work in conjunction with other systems) for encryption that includes elements that execute the functions as described. The computer system of the preferred embodiment may be defined by, and the computer program product may be embodied in, signals carried by networks, including the Internet or may be embodied in media such as magnetic, electronic or optical storage media.

The preferred embodiment is described with reference to encryption steps. However, it will be appreciated that the preferred embodiment may be implemented with respect to decryption processes, also.

It will be appreciated by those skilled in the art that the masking referred to in the description of the preferred embodiment is carried out by the use of a bit-wise exclusive-or operation (XOR) with respect to different values expressed in a binary format. However, other masking operations may be used. For example arithmetic masking (involving the use of addition and/or subtraction in place of the exclusive-or operation) may also be used.

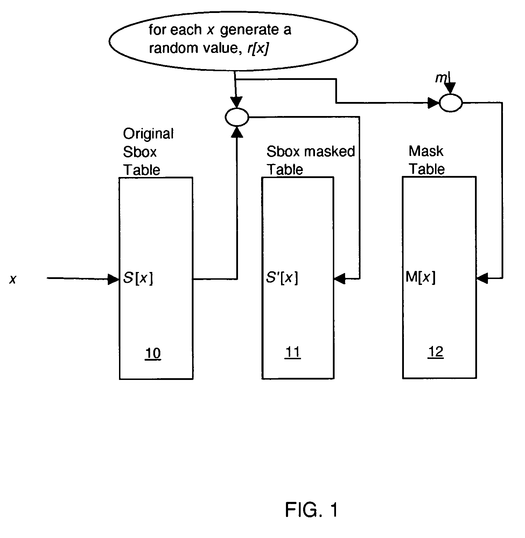

According to the preferred embodiment, full random masking of table outputs is supported. Figure 1 is a block diagram that shows a generalized example of the preferred embodiment including substitution table 10, masked substitution table 11, and mask table 12. In the preferred embodiment, substitution table 10 is also referred to as an S-box, and masked substitution table 11 is also referred to as a masked S-box. It will be understood that such tables as used in cryptographic operations are linear/non-linear transforms of the form y=T[x], where T[] is a transformation. The tables referred to in the description of the preferred embodiment carry out non-linear transformations of input values by reading values at addresses in the tables, these addresses being functions of the input values. The read values are output values for the tables. Substitution table 10 is a typical substitution table implemented in the preferred embodiment as a lookup table in which the index into the table (the input value) is represented as the variable x. Although the address that is looked up in the table may be a function of the variable x, in the preferred embodiment the look up is a direct one - the input value is mapped directly to an address in the substitution table.

According to the preferred embodiment, each entry in substitution table 10 is masked by an individually generated random value to yield masked substitution table 11. As shown in Figure 1, each entry in substitution table 10 is represented as $S[x]$. The mask for each entry in substitution table 10 is a random value: for entry $S[x]$, the masking random value is denoted $r[x]$. As shown in Figure 1, the result of masking $S[x]$ with the value $r[x]$ is the value $S'[x]$ in masked substitution table 11. In Figure 1, as in the other figures, a masking operation (a bit-wise exclusive-or operation in the preferred embodiment) is shown by a small circle or oval.

As indicated, in the preferred embodiment, a random value $r[x]$ is generated for each index x in substitution table 10. It will be appreciated by those skilled in the art that pseudo-random values will also work with the preferred embodiment. The $r[x]$ values are denoted as if they appear in a table, however, as described below, the values can also be generated as they are needed for individual index values in substitution table 10.

As referred to above, in the preferred embodiment, each $r[x]$ random value is bitwise exclusive-or'd with the value $S[x]$ and the result stored in the position in the masked substitution table 11 for the index $x$. In this way, in accordance with the preferred embodiment, masked substitution table 11 is defined for each $x$ as follows:

$$S'[x] = S[x]^{\wedge}r[x]$$

In the preferred embodiment, $r[x]$ is the random mask for each entry in substitution table 10 and $r[x]$ is a function of the table address, $x$. Previous approaches to masking the output of a substitution table (S-box) used a constant mask, $r1$, for all data in the table and when a new random masking was required, it was necessary to regenerate the whole table to utilize the next new random value mask, $r2$. As will be set out below, the approach of the preferred embodiment does not require a complete regeneration of the entire masked substitution table 11 to utilize a new random mask value for an entry in the table. The fact that there is no requirement to regenerate the entire table means that the countermeasure is suitable for use in devices that are constrained in the power available for cryptographic processing. For example, the method of the preferred embodiment is useful in cryptographic functions carried out in wireless handheld devices.

In the preferred embodiment, a second corresponding table, mask table 12 in Figure 1, is used to store a corresponding mask for each address in substitution table 10. This mask table 12 is defined such that the exclusive-or of the masked S-box (table 11) and the mask table (table 12) is a fixed masked value. This relationship of the mask table with a fixed masked value may be denoted $m = r[x] \wedge M[x]$, for all $x$. As is indicated in Figure 1, a random value $m$ is generated once for substitution table 10. Each entry in mask table 12 is thus defined such that the bit-wise exclusive-or of the entry with the random value $r[x]$ is the value $m$.

As will be appreciated, in the preferred embodiment masked substitution table 11 and mask table 12 are the same size as substitution table 10, and each produces output having the same size (the same number of bits).

The approach of the preferred embodiment permits cryptographic operations to be carried out such that the masking value $m$ does not need to be computed during the execution of the operations. The respective definitions of masked substitution table 11 and mask table 12 are usable by cryptographic operations such that the output of the original substitution table is masked with a fixed mask, without the fixed mask being directly computed. This is possible because due to the definitions of the tables, the following identity is true: $S[x] \wedge r[x] \wedge M[x] = m \wedge S[x]$. As set out above, $S'[x] = S[x] \wedge r[x]$ and therefore by a cryptographic operation utilizing masked substitution table 11 and mask table 12, a result equivalent to that achieved by using a mask on the output of substitution table 10 may be achieved without directly using the masking value $m$ in the cryptographic operation.

As indicated, to avoid a first order DPA attack, the exclusive-or of the masked S-box and mask table, $S[x] \wedge r[x] \wedge M[x] = m \wedge S[x]$ or $m$ is never computed during the execution of the cryptographic process.

According to the preferred embodiment, on each access of masked substitution table 11 and mask table 12, the masking is refreshed. Because the relationship between the table values $S'[x]$ and $M[x]$ are fixed by their initial definition, these pairs of values may be changed by applying the same randomly defined value, without altering the way in which the tables themselves may be used. Thus, in the preferred embodiment, a new random value $r$ is generated for each table access and the value $S'[x] \wedge r$ and $M[x] \wedge r$ are used to replace values $S'[x]$ and $M[x]$, respectively.

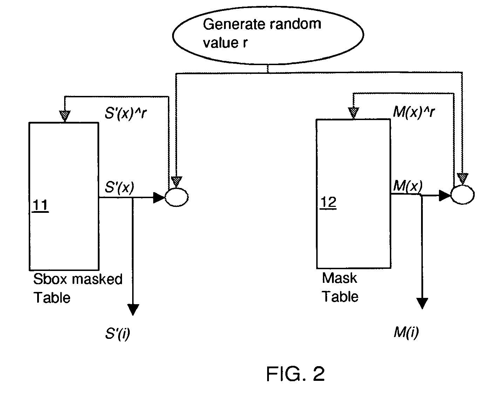

This replacement is shown in the block diagram of Figure 2. Masked substitution table 11 is shown with replacement value $S'[x] \wedge r$ being placed in the table following the generation of the random value r after an access of the table. The similar substitution of $M[x] \wedge r$ for $M[x]$ is shown for mask table 12. In this manner, the masking of the table values is dynamically updated without requiring a regeneration of an entire table. In the preferred embodiment such dynamic updating takes place whenever an entry in the tables is accessed. A more general approach is to update the tables in the same manner but only after a predefined number of accesses has taken place. This number may be defined to be 1, in which case the updating will occur on every access, as in the preferred embodiment.

As will be appreciated by those skilled in the art, a second order DPA attack may possibly be made on the masking as described above with reference to Figure 1. The approach of the preferred embodiment shown in Figure 1 may, however, be extended to permit masking of substitution tables using a set of mask tables, rather the single mask table 12 shown in the example of Figure 1. The definition of the set of n mask tables requires an (n+1)th order DPA attack to seek to obtain key or mask values for the tables used in the cryptographic operations.

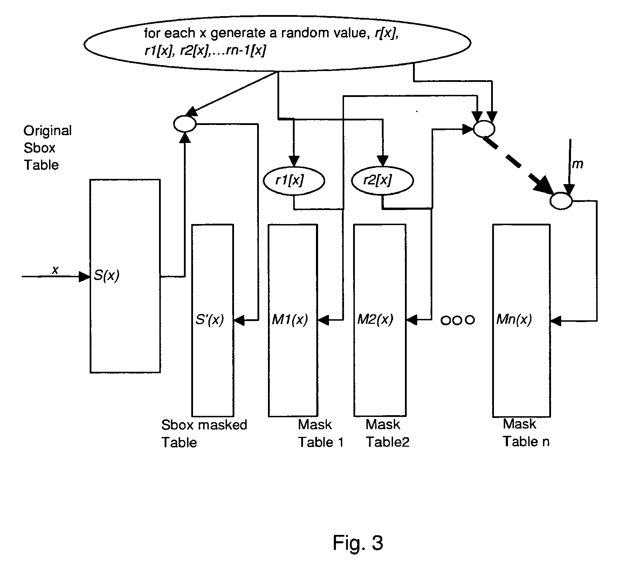

Figure 3 shows the relationship of the different mask tables. In the example of Figure 3, substitution table 10 and masked substitution table 11 are defined as in the example of Figure 1. However, for each $x$, a set of random values $r[x]$, $r_1[x]$, ... $r_{n-1}[x]$ are defined. As is shown in Figure 3, mask tables $M_1[x]$, ... $M_{n-1}[x]$ are defined to store the random values $r_1[x]$, ... $r_{n-1}[x]$ respectively (after generation, the random values are stored in the set of mask tables). Mask table $M_n[x]$ is defined such that $r_n[x] = m \wedge r[x] \wedge r_1[x] \wedge ... \wedge r_{n-1}[x]$. As a result, the identity

$$S[x] \wedge r[x] \wedge r_1[x] \wedge \ldots \wedge r_n[x] = m \wedge S[x]$$

applies and, as was the case with the example of Figure 1, the table values defined as shown in Figure 3 may be used to effectively provide output value masking for substitution table 10, without calculating the value $m$.

According to the preferred embodiment, the definition of masked substitution table 11 and of mask table 12 may take place, for example, in a computing device at a point prior to the implementation of cryptographic operations that are to utilize the tables. In this manner, it is possible to define the tables on a computing device in a secure environment and to later download the particular program code that will cause cryptographic operations to be carried out on the device. Because the original definition of the table is computed only once, the value m is used to pre-compute tables before cryptographic code is downloaded to the device.

The preferred embodiment may be applied to different cryptographic operations where output masking of tables is required. The tables of the preferred embodiment are typically used in a pair-wise fashion, with cryptographic operations carried out with respect to the masked substitution tables being similarly carried out with respect to the corresponding mask tables. A final masking step combines the values derived from the masked substitution tables and the mask tables. In this way the output mask applied to the table is not directly computed during the cryptographic operations but the result is effectively masked by the pre-defined mask value. As indicated above, the appropriate substitution tables and related mask values may be pre-computed to ensure the value of $m$ is maintained securely.

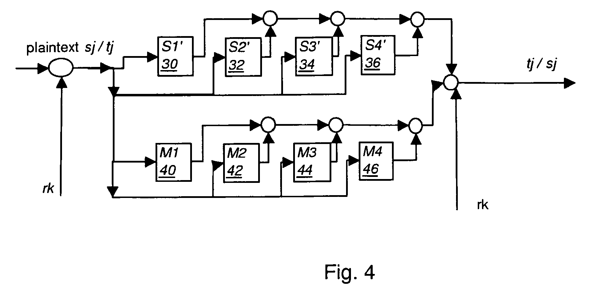

The application of the approach of the preferred embodiment to the AES cryptographic operations is shown in Figure 4. Figure 4 shows the use of a single mask table (the AES algorithm includes four sub-tables and Figure 4 thus shows the single mask table in four sub-tables). The block diagram of Figure 4 shows two parallel sets of computations: the upper series of masked substitution tables 30, 32, 34, 36 are used in one set of computations, and the lower series of mask tables 40, 42, 44, 46 is used in the other. As may be observed, the set of masked substitution tables 30, 32, 34, 36 are used in the same manner that an S-box would be used in the typical AES method. Round key rk is shown as being applied to plaintext to generate sj/tj in Figure 4, and also at the output. Mask tables 40, 42, 44, 46 are utilized in the same way as are the masked substitution tables. The results of the operations on the masked substitution tables and on the mask tables, however, are combined by an exclusive-or operation (as illustrated in Figure 4). The result is the masking of the AES output value by the value $m$, without that value being directly used in the different steps in the cryptographic operation.

In the example of Figure 4, mask table 40 may be related to masked substitution table 30 by random values $r[x]$ that differ from the set of random values used to define the other pairs of masked substitution tables and mask tables (for example, mask table 42 and masked substitution table 32). In an alternative implementation, a single mask table could be used for all four S-boxes (tables 30, 32, 34, 36). In such a case, the same random value at address $x$ is used for all S-boxes, requiring tables $S1'[x]=S1[x]\wedge r[x]$, $S2'[x]=S2[x]\wedge r[x]$, $S3'[x]=S3[x]\wedge r[x]$, $S4'[x]=S4[x]\wedge r[x]$, and $M[x]$, where $M[x]\wedge r[x]=m$). Another implementation includes one or more sets of mask tables, as described above with reference to Figure 3, which sets of mask tables are used for each of the S-boxes, or alternatively a subset.

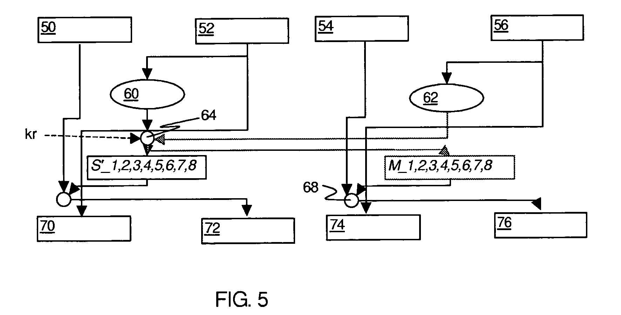

A similar use of sets of related tables (masked substitution tables and mask tables) is possible in a DES encryption operation. An example of such a use is shown in the block diagram of Figure 5. In Figure 5, an example of round r of the DES mechanism, as modified to include the tables of the preferred embodiment, is shown. Figure 5 shows two interrelated sets of tables. Figure 5 abbreviates the table representations such that "$S'\_1,2,3,4,5,6,7,8$" represents a set of eight masked substitution tables. In Figure 5 a set of related mask tables, defined in accordance with the preferred embodiment as indicated above, is also shown and is represented "$M\_1,2,3,4,5,6,7,8$". Each of the two sets of tables are subject to the typical DES operations. Figure 5 shows the movement of data for an example round r in the modified DES encryption. As in the usual DES steps, there are two data sets. In the modified approach, DES steps carried out on the masked substitution tables are mirrored with steps carried out on the mask tables. Thus inputs 50, 52 for steps with respect to tables $S'\_1,2,3,4,5,6,7,8$ are mirrored by inputs 54, 56 for steps with respect to tables $M\_1,2,3,4,5,6,7,8$. For both sets of inputs, expansion permutations are carried out: shown in ovals 60, 62 in Figure 5, respectively. Figure 5 shows the round key, denoted kr, being exclusive-or'd with the output of both the expansion permutations 60, 62. The resulting values are used as input for both the masked substitution tables and for the mask tables. The results of these table look-ups are then subject to the exclusive-or operations 66, 68, respectively, in accordance with the DES approach. The results are part of the output set 70, 72, 74, 76 as shown in Figure 5.

At the conclusion of the DES rounds, the results of both the masked substitution table steps and the mask table steps are exclusive-or'd in the appropriate manner and the results are then input to the final permutation to provide the desired result of the DES operation (encryption or decryption, as the case may be). The use of the masked substitution tables and the mask tables permits table look-up output values to be effectively masked, without using the mask value directly in the computations of the DES operations.

Figure 5 shows 8 mask tables associated with the 8 masked substitution tables defined in accordance with the DES algorithm. As was the case with the implementation of the preferred embodiment with respect to the AES cryptographic process referred to above, an alternative implementation provides that instead of 8 mask tables (one for each of the 8 masked substitution tables, as is denoted in Figure 5), it is possible to use a single mask table for all 8 masked substitution tables (requiring the same $r[x]$ vector to be used in all 8 tables). Furthermore a set of several mask tables may be used for all masked substitution tables, or a subset, thus requiring a higher order DPA attack to make the cryptographic operations insecure. Where a single set of several mask tables is used for all masked substitution tables, the set will have the same $r[x]$ vector for all 8 tables. Where there are multiple sets of mask tables, different $r[x]$ vectors are used for each of masked substitution tables that are associated with different sets of mask tables.

The preferred embodiment is described having masked substitution tables and corresponding mask tables that are potentially unchanging or that are dynamically updated by masking entries in such tables after entry access. It will also be understood that the tables may be regenerated for each cryptographic operation, if this overhead cost is able to be borne by the device and the application utilizing the cryptographic operation. Alternatively, a number of sets of masked substitution tables and mask tables may be pre-computed and the different sets may be used for differing cryptographic operations.

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A computing device-implemented method for obtaining one or more masked output values from cryptographic operations defined with reference to one or more substitution tables, the output values being equivalent to values masked with a fixed mask value $m$, the method being **characterized by** the steps of:

    individually generating a random value $r[x]$ for each address $x$ in the one or more substitution tables (10),
    defining one or more masked substitution tables (11) by masking each value in the substitution tables (10) at address $x$ with the corresponding value $r[x]$, and
    defining one or more mask tables (12) corresponding to the one or more masked substitution tables (11) such that each value at an address $x$, when masked with the corresponding value $r[x]$, is equal to the fixed mask value m.

2. A computing device-implemented method as claimed in claim 1 comprising the step of individually generating random values $r_1[x]... r_{n-1}[x]$ for each address $x$ in the one or more substitution tables (10) and defining one or more sets of masked substitution tables $M_1 ... M_{n-1}$ (11) to store the random values $r_1[x]... r_{n-1}[x]$, wherein the step of defining one or more mask tables (12) comprises defining one or more mask tables $M_n$ (12) having entries $r_n[x]$ corresponding to the masked substitution tables (11) such that $r_n[x] = m \hat{} r[x] \hat{} r_1[x] \hat{} ... \hat{} r_{n-1}[x]$.

3. A computing device-implemented method as claimed in claim 1 or claim 2 to mask table output values for an AES cryptographic operation, the method further comprising carrying out first AES cryptographic steps on a set of masked substitution tables (11) and carrying out second AES cryptographic steps on a set of mask tables (12), the values resulting from the first and the second AES cryptographic steps being combined to provide masked output values.

4. A computing device-implemented method as claimed in claim 1 or claim 2 to mask table output values for DES encryption operations, the method further comprising the steps of carrying out a first set of DES cryptographic steps on a set of masked substitution tables and carrying out a second set of DES cryptographic steps a set of mask tables, intermediate results from steps in the first set and in the second set of DES cryptographic steps being masked with intermediate results of the corresponding step in the other set of DES cryptographic steps so as to be used as inputs for succeeding steps, the values resulting from the first and the second sets of DES cryptographic steps being combined to provide masked table output values.

5. A computing device-implemented method as claimed in any one of claims 1 to 4 further comprising the steps of dynamically regenerating each corresponding masked substitution table (11) and mask table (12) by, after a predetermined number of table entries are accessed, redefining each of the accessed entries in the said corresponding tables (11, 12) by masking the entry in each of the said tables (11, 12) with an individually generated random value.

6. A computing device-implemented method as claimed in claim 3 or claim 4 in which the steps of defining the masked substitution tables (11) and the mask tables (12) are carried out prior to a step of downloading program code for carrying out the further cryptographic steps.

7. A system for obtaining one or more masked output values from cryptographic operations defined with reference to one or more substitution tables, the output values being equivalent to values masked with a fixed mask value $m$, the system being **characterized by**:

    a random number generator operative to individually generate a random value $r[x]$ for each address $x$ in the one or more substitution tables (10),
    one or more masked substitution tables (11) defined by masking each value in the substitution tables (10) at address $x$ with the corresponding value $r[x]$, and
    one or more mask tables (12) corresponding to the masked substitution tables (11) such that each value at an address $x$, when masked with the corresponding value $r[x]$, is equal to the fixed mask value $m$.

8. A system as claimed in claim 7 including a random number generator operative to individually generate random values $r_1[x]... r_{n-1}[x]$ for each address $x$ in the one or more substitution tables (10) and one or more sets of masked substitution tables $M_1 ... M_{n-1}$ (11) defined to store the random values $r_1[x] ... r_{n-1}[x]$, wherein the one or more mask tables $M_n$ (12) have entries $r_n[x]$ corresponding to the masked substitution tables (11) such that $r_n[x] = m \wedge r[x] \wedge r_1[x] \wedge ... \wedge r_{n-1}[x]$.

9. A computing device program product for obtaining one or more masked output values from cryptographic operations defined with reference to one or more substitution tables, the output values being equivalent to values masked with a fixed mask value *m*, the program product comprising program code means embodied in a program product media, the program code means comprising

    program code operative to cause individual generation of a random value *r*[x] for each address *x* in the one or more substitution tables (10),

    program code operative to define one or more masked substitution tables (11) by masking each value in the substitution tables at address *x* with the corresponding value *r*[x], and

    program code operative to define one or more mask tables (12) corresponding to the masked substitution tables (11) such that each value at an address *x*, when masked with the corresponding value *r*[x], is equal to the fixed mask value *m*.

10. A computing-device program product as claimed in claim 9 comprising program code means operative to individually generate random values $r_1[x] ... r_{n-1}[x]$ for each address x in the one or more substitution tables (10) and defining one or more sets of masked substitution tables $M_1 ... M_{n-1}$ (11) to store the random values $r_1[x]... r_{n-1}[x]$, wherein the program code operative to define one or more mask tables $M_n$ (12) defines one or more mask tables $M_n$ (12) having entries $r_n[x]$ corresponding to the masked substitution tables such that $r_n[x] = m \wedge r[x] \wedge r_1[x] \wedge ... \wedge r_{n-1}[x]$.

11. A computing-device program product as claimed in claim 9 or claim 10 for masking table output values for an AES cryptographic operation, the program code means comprising program code operative to carry out first AES cryptographic steps on a set of masked substitution tables (11) and to carry out second AES cryptographic steps on a set of mask tables (12), the program code operative to combine the values resulting from the first and the second AES cryptographic steps to provide masked output values.

12. A computing device program product as claimed in claim 9 or claim 10 for masking table output values for DES encryption operations, the program code means comprising program code operative to carry out a first set of DES cryptographic steps on a set of masked substitution tables (11) and to carry out a second set of DES cryptographic steps a set of mask tables (12), intermediate results from steps in the first set and in the second set of DES cryptographic steps being masked with intermediate results of the corresponding step in the other set of DES cryptographic steps so as to be used as inputs for succeeding steps, the program code comprising code operative to combine the values resulting from the first and the second sets of DES cryptographic steps to provide masked table output values.

13. A computing device program product as claimed in any one of claims 9 to 12 further comprising program code operative to dynamically regenerate each corresponding masked substitution table (11) and mask table (12) by, after a value is accessed, redefining the accessed value in the said corresponding tables (11, 12) by masking the value in each of the said tables (11, 12) with a randomly generated value.

14. A computing device program product as claimed in claim 11 or claim 12 in which the program code operative to define the masked substitution tables (11) and the mask tables (12) is executed prior to downloading program code for carrying out the further cryptographic steps.

**Patentansprüche**

1. Verfahren, das durch eine Computervorrichtung implementiert wird, zum Erhalten eines oder mehrerer maskierter Ausgabewerte aus Verschlüsselungsoperationen, die unter Bezugnahme auf eine oder mehrere Substitutionstabellen definiert sind, wobei die Ausgabewerte Werten entsprechen, die mit einem festen Maskenwert m maskiert sind, wobei das Verfahren durch folgende Schritte gekennzeichnet ist:

    individuelles Erzeugen eines Zufallswerts r[x] für jede Adresse x in der einen oder den mehreren Substitutionstabellen (10),
    Definieren einer oder mehrerer maskierter Substitutionstabellen (11) durch Maskieren jedes Werts in den Substitutionstabellen (10) bei der Adresse x mit dem entsprechenden Wert r[x], und
    Definieren einer oder mehrerer Maskentabellen (12), die der einen oder den mehreren maskierten Substitutionstabellen (11) entsprechen, so dass jeder Wert bei einer Adresse x dem festen Maskenwert m entspricht, wenn er mit dem entsprechenden Wert r[x] maskiert wird.

2. Verfahren, das durch eine Computervorrichtung implementiert wird, nach Anspruch 1, das folgende Schritte umfasst: individuelles Erzeugen von Zufallswerten r1[x] ... m-1[x] für jede Adresse x in der einen oder den mehreren Substitutionstabellen (10) sowie Definieren einer oder mehrerer Gruppen von maskierten Substitutionstabellen M1...Mn-1 (11), um die Zufallswerte r1[x] ... rn-1 [x] zu speichern, wobei der Schritt des Definierens einer oder mehrerer Maskentabellen (12) das Definieren einer oder mehrerer Maskentabellen Mn (12) umfasst, die Einträge rn[x] aufweisen, die den maskierten Substitutionstabellen (11) entsprechen, so dass rn[x] = m^ r[x]^r1[x]^...^rn-1[x].

3. Verfahren, das durch eine Computervorrichtung implementiert wird, nach Anspruch 1 oder Anspruch 2 zum Maskieren von Tabellenausgabewerten für eine AES-Verschlüsselungsoperation, wobei das Verfahren des Weiteren Folgendes umfasst: Ausführen erster AES-Verschlüsselungsschritte an einer Gruppe von maskierten Substitutionstabellen (11) und Ausführen zweiter AES-Verschlüsselungsschritte an einer Gruppe von Maskentabellen (12), wobei die Werte, die aus den ersten und zweiten AES-Verschlüsselungsschritten resultieren, kombiniert werden, um maskierte Ausgabewerte bereitzustellen.

4. Verfahren, das durch eine Computervorrichtung implementiert wird, nach Anspruch 1 oder Anspruch 2 zum Maskieren von Tabellenausgabewerten für DES-Verschlüsselungsoperationen, wobei das Verfahren des Weiteren folgende Schritte umfasst: Ausführen einer ersten Gruppe von DES-Verschlüsselungsschritten an einer Gruppe von maskierten Substitutionstabellen und Ausführen einer zweiten Gruppe von DES-Verschlüsselungsschritten an einer Gruppe von Maskentabellen, wobei Zwischenergebnisse aus Schritten in der ersten Gruppe und der zweiten Gruppe von DES-Verschlüsselungsschritten mit Zwischenergebnissen des entsprechenden Schritts in der anderen Gruppe von DES-Verschlüsselungsschritten maskiert werden, um als Eingaben für nachfolgende Schritte verwendet zu werden, wobei die Werte, die aus der ersten und zweiten Gruppe von DES-Verschlüsselungsschritten resultieren, kombiniert werden, um maskierte Tabellenausgabewerte bereitzustellen.

5. Verfahren, das durch eine Computervorrichtung implementiert wird, nach einem der Ansprüche 1 bis 4, das des Weiteren folgende Schritte umfasst: dynamisches Regenerieren jeder entsprechenden maskierten Substitutionstabelle (11) und Maskentabelle (12) durch erneutes Definieren jedes Eintrags, auf den in den entsprechenden Tabellen (11, 12) zugegriffen wurde, nach einer vorherbestimmten Anzahl von Tabelleneintragszugriffen, durch Maskieren des Eintrags in jeder der Tabellen (11, 12) mit einem individuell erzeugten Zufallswert.

6. Verfahren, das durch eine Computervorrichtung implementiert wird, nach Anspruch 3 oder Anspruch 4, bei dem die Schritte des Definierens der maskierten Substitutionstabellen (11) und der Maskentabellen (12) vor einem Schritt des Ladens von Programmcode zur Ausführung der weiteren Verschlüsselungsschritte ausgeführt werden.

7. System zum Erhalten eines oder mehrerer maskierter Ausgabewerte aus Verschlüsselungsoperationen, die unter Bezugnahme auf eine oder mehrere Substitutionstabellen definiert sind, wobei die Ausgabewerte Werten entsprechen, die mit einem festen Maskenwert m maskiert sind, wobei das System durch Folgendes gekennzeichnet ist:

   einen Zufallszahlengenerator, der einen Zufallswert r[x] für jede Adresse x in der einen oder den mehreren Substitutionstabellen (10) individuell erzeugen kann,
   eine oder mehrere maskierte Substitutionstabellen (11), die durch Maskieren jedes Werts in den Substitutionstabellen (10) bei der Adresse x mit dem entsprechenden Wert r[x] definiert sind, und
   eine oder mehrere Maskentabellen (12), die den maskierten Substitutionstabellen (11) entsprechen, so dass jeder Wert bei einer Adresse x dem festen Maskenwert m entspricht, wenn er mit dem entsprechenden Wert r[x] maskiert wird.

8. System nach Anspruch 7, das einen Zufallszahlengenerator umfasst, der Zufallswerte r1[x] ... m-1[x] für jede Adresse x in der einen oder den mehreren Substitutionstabellen (10) individuell erzeugen kann, sowie eine oder mehrere Gruppen von maskierten Substitutionstabellen M1...Mn-1 (11), die zum Speichern der Zufallswerte r1[x] ... m-1[x] definiert sind, wobei die eine oder mehreren Maskentabellen Mn (12) Einträge rn[x] aufweisen, die den maskierten Substitutionstabellen (11) entsprechen, so dass rn[x] = m^ r[x]^r1[x]^...^rn-1[x].

9. Computervorrichtungsprogrammprodukt zum Erhalten eines oder mehrerer maskierter Ausgabewerte aus Verschlüsselungsoperationen, die unter Bezugnahme auf eine oder mehrere Substitutionstabellen definiert sind, wobei die Ausgabewerte Werten entsprechen, die mit einem festen Maskenwert m maskiert sind, und das Programmprodukt Programmcodemittel umfasst, die in einem Programmproduktmedium verwirklicht sind, wobei das Programmcodemittel Folgendes umfasst:

   einen Programmcode, der das individuelle Erzeugen eines Zufallswerts r[x] für jede Adresse x in der einen oder den mehreren Substitutionstabellen (10) verursachen kann,

einen Programmcode, der eine oder mehrere maskierte Substitutionstabellen (11) durch Maskieren jedes Werts in den Substitutionstabellen (10) bei der Adresse x mit dem entsprechenden Wert r[x] definieren kann, und

einen Programmcode, der eine oder mehrere Maskentabellen (12) definieren kann, die den maskierten Substitutionstabellen (11) entsprechen, so dass jeder Wert bei einer Adresse x dem festen Maskenwert m entspricht, wenn er mit dem entsprechenden Wert r[x] maskiert wird.

10. Computervorrichtungsprogrammprodukt nach Anspruch 9, das Programmcodemittel umfasst, die Zufallswerte r1[x] ... rn-1[x] für jede Adresse x in der einen oder den mehreren Substitutionstabellen (10) individuell erzeugen können, und das eine oder mehrere Gruppen von maskierten Substitutionstabellen M1...Mn-1 (11) definiert, um die Zufallswerte r1[x] ... rn-1[x] zu speichern, wobei der Programmcode, der eine oder mehrere Maskentabellen Mn (12) definieren kann, eine oder mehrere Maskentabellen Mn (12) definiert, die Einträge rn[x] aufweisen, die den maskierten Substitutionstabellen entsprechen, so dass rn[x] = m^ r[x]^r1[x]^...^rn-1[x].

11. Computervorrichtungsprogrammprodukt nach Anspruch 9 oder Anspruch 10 zum Maskieren von Tabellenausgabewerten für eine AES-Verschlüsselungsoperation, wobei das Programmcodemittel Programmcode umfasst, der erste AES-Verschlüsselungsschritte an einer Gruppe von maskierten Substitutionstabellen (11) und zweite AES-Verschlüsselungsschritte an einer Gruppe von Maskentabellen (12) ausführen kann, und der Programmcode die Werte, die aus den ersten und zweiten AES-Verschlüsselungsschritten resultieren, kombinieren kann, um maskierte Ausgabewerte bereitzustellen.

12. Computervorrichtungsprogrammprodukt nach Anspruch 9 oder Anspruch 10 zum Maskieren von Tabellenausgabewerten für DES-Verschlüsselungsoperationen, wobei das Programmcodemittel Programmcode umfasst, der eine erste Gruppe von DES-Verschlüsselungsschritten an einer Gruppe von maskierten Substitutionstabellen (11) und eine zweite Gruppe von DES-Verschlüsselungsschritten an einer Gruppe von maskierten Tabellen (12) ausführen kann, wobei Zwischenergebnisse aus den Schritten der ersten Gruppe und der zweiten Gruppe von DES-Verschlüsselungsschritten mit Zwischenergebnissen des entsprechenden Schritts in der anderen Gruppe von DES-Verschlüsselungsschritten maskiert werden, um als Eingaben für nachfolgende Schritte verwendet zu werden, wobei der Programmcode Code umfasst, der die Werte, die aus der ersten und zweiten Gruppe von DES-Verschlüsselungsschritten resultieren, kombinieren kann, um maskierte Tabellenausgabewerte bereitzustellen.

13. Computervorrichtungsprogrammprodukt nach einem der Ansprüche 9 bis 12, das des Weiteren Programmcode umfasst, der jede entsprechende maskierte Substitutionstabelle (11) und Maskentabelle (12) durch erneutes Definieren des Werts, auf den in den entsprechenden Tabellen (11, 12) zugegriffen wurde, nachdem auf einen Wert zugegriffen wurde, durch Maskieren des Werts in jeder der Tabellen (11, 12) mit einem zufällig erzeugten Wert dynamisch regenerieren kann.

14. Computervorrichtungsprogrammprodukt nach Anspruch 11 oder Anspruch 12, bei dem der Programmcode, der die maskierten Substitutionstabellen (11) und die Maskentabellen (12) definieren kann, vor dem Laden von Programmcode zur Ausführung der weiteren Verschlüsselungsschritte ausgeführt wird.

## Revendications

1. Un procédé mis en oeuvre sur dispositif de calcul pour obtenir une ou plusieurs valeurs de sortie masquées à partir d'opérations cryptographiques définies en référence à un ou plusieurs tableaux de substitution, les valeurs de sortie étant équivalentes aux valeurs masquées à l'aide d'une valeur masque $m$, le procédé étant **caractérisé par** les étapes de :

création d'une valeur aléatoire $r[x]$ individuellement pour chaque adresse $x$ dans le ou les tableaux de substitution (10), définition d'un ou de plusieurs tableaux de substitution masqués (11) en masquant chacune des valeurs présentes dans les tableaux de substitution (10) à l'adresse $x$ avec la valeur correspondante $r[x]$, et définition d'un ou de plusieurs tableaux masques (12) correspondant au ou aux tableaux de substitution masqués (11) de sorte que chaque valeur à une adresse $x$, lorsqu'elle est masquée avec la valeur $r[x]$ correspondante, est égale à la valeur masque fixe $m$.

2. Un procédé mis en oeuvre sur dispositif de calcul tel que revendiqué dans la revendication 1 comportant l'étape de création de valeurs aléatoires $r_1[x] ... r_{n-1}[x]$ individuellement pour chaque adresse $x$ dans le ou les tableaux de substitution (10) et de définition d'un ou plusieurs ensembles de tableaux de substitution masqués $M_1...M_{n-1}$ (11) pour enregistrer les valeurs aléatoires $r_1[x]...r_{n-1}[x]$ où l'étape de définition d'un ou de plusieurs tableaux masques (12) comporte la définition d'un ou de plusieurs tableaux masques $M_n$ (12) ayant des entrées $r_n[x]$ correspondant aux tableaux de substitution masqués (11) de sorte que $r_n[x] = m\hat{}r[x]\hat{}r_1[x]\hat{} \ ... \ \hat{}r_{n-1}[x]$.

3. Un procédé mis en oeuvre sur dispositif de calcul tel que revendiqué dans la revendication 1 ou la revendication 2 pour masquer des valeurs de sortie de tableaux pour une opération cryptographique AES, le procédé comportant en outre l'exécution de premières étapes cryptographiques AES sur un ensemble de tableaux de substitution masqués (11) et l'exécution de deuxièmes étapes cryptographiques AES sur un ensemble de tableaux masques (12), les valeurs résultant des premières et des deuxièmes étapes cryptographiques AES étant combinées pour produire des valeurs de sortie masquées.

4. Un procédé mis en oeuvre sur dispositif de calcul tel que revendiqué dans la revendication 1 ou la revendication 2 pour masquer des valeurs de sortie de tableaux pour des opérations de cryptage DES, le procédé comportant en outre les étapes d'exécution d'une première série d'étapes cryptographiques DES sur un ensemble de tableaux de substitution masqués et d'exécution d'une seconde série d'étapes cryptographiques DES sur un ensemble de tableaux masques, les résultats intermédiaires des étapes de la première série et de la deuxième série d'étapes cryptographiques DES étant masqués par les résultats intermédiaires de l'étape correspondante dans l'autre série d'étapes cryptographiques DES afin d'être utilisés comme entrées pour les étapes ultérieures, les valeurs résultant de la première et de la deuxième série d'étapes cryptographiques DES étant combinées pour produire les valeurs de sortie des tableaux masqués.

5. Un procédé mis en oeuvre sur dispositif de calcul tel que revendiqué dans l'une quelconque des revendications 1 à 4 comportant en outre les étapes de régénération dynamique de chaque tableau de substitution masqué (11) et tableau masque (12) correspondants par, après avoir eu accès à un nombre prédéterminé d'entrées de tableaux, la redéfinition de chacune des entrées accédées dans lesdits tableaux (11, 12) correspondants en masquant l'entrée dans chacun desdits tableaux (11, 12) avec une valeur aléatoire individuellement générée.

6. Un procédé mis en oeuvre sur dispositif de calcul tel que revendiqué dans la revendication 3 ou la revendication 4 dans lequel les étapes de définition des tableaux de substitution masqués (11) et des tableaux masques (12) sont exécutées avant une étape de téléchargement du code de programme pour l'exécution d'étapes cryptographiques supplémentaires.

7. Un système d'obtention d'une ou de plusieurs valeurs de sortie masquées à partir d'opérations cryptographiques définies en référence à un ou plusieurs tableaux de substitution, les valeurs de sortie étant équivalentes aux valeurs masquées à l'aide d'une valeur masque $m$, le système étant **caractérisé par** :

un opérateur générateur de nombres aléatoires permettant de créer une valeur aléatoire $r[x]$ individuellement pour chaque adresse $x$ dans le ou les tableaux de substitution (10), un ou plusieurs tableaux de substitution masqués (11) définis par le masquage de chaque valeur présente dans les tableaux de substitution (10) à l'adresse $x$ avec la valeur correspondante $r[x]$, et un ou plusieurs tableaux masques (12) correspondant aux tableaux de substitution masqués (11) de sorte que chaque valeur à une adresse $x$, lorsqu'elle est masquée avec la valeur correspondante $r[x]$, est égale à la valeur masque fixe $m$.

8. Un système tel que revendiqué dans la revendication 7 comportant un opérateur générateur de nombres aléatoires permettant de créer des valeurs aléatoires $r_1[x] \ ... \ r_{n-1}[x]$ individuellement pour chaque adresse $x$ dans le ou les tableaux de substitution (10) et un ou plusieurs ensembles de tableaux de substitution masqués $M_1..M_{n-1}$ (11) définis pour stocker les valeurs aléatoires $r_1[x]...r_{n-1}[x]$ où le ou les tableaux masques $M_n$ (12) possèdent des entrées $r_n[x]$ correspondant aux tableaux de substitution masqués (11) de sorte que $r_n[x] = m\hat{}r[x]\hat{}r_1[x]\hat{}...\hat{}r_{n-1}[x]$.

9. Un produit-programme sur dispositif de calcul permettant d'obtenir une ou plusieurs valeurs de sortie masquées à partir d'opérations cryptographiques définies en se référant à un ou plusieurs tableaux de substitutions, les valeurs de sortie étant équivalentes aux valeurs masquées avec une valeur masque fixe $m$, le produit-programme comportant un moyen de création de code de programme représenté par un support du produit-programme, le moyen de création de code de programme comportant un opérateur de code de programme pour permettre la création individuelle d'une valeur aléatoire $r[x]$ pour chaque adresse $x$ dans le ou les tableaux de substitution (10), un opérateur de code de programme pour définir un ou plusieurs tableaux de substitution masqués (11) en masquant chaque valeur des tableaux de substitution à l'adresse x avec la valeur $r[x]$ correspondante, et un opérateur de code de programme pour définir un ou plusieurs tableaux masques (12) correspondant aux tableaux de substitution masqués (11) de sorte que chaque valeur à l'adresse $x$, lorsqu'elle est masquée par la valeur $r[x]$ correspondante, est égale à la valeur masque fixe *m*.

**10.** Un produit-programme sur dispositif de calcul tel que revendiqué dans la revendication 9 comportant un opérateur de moyen de création de code programme permettant de créer des valeurs aléatoires $r_1[x]...r_{n-1}[x]$ individuellement pour chaque adresse x dans le ou les tableaux de substitution (10) et définissant un ou plusieurs ensembles de tableaux de substitution masqués $M_1...M_{n-1}$ (11) pour stocker les valeurs aléatoires $r_1[x] ... r_{n-1}[x]$ où l'opérateur de code de programme pour définir un ou plusieurs tableaux masques $M_n$ (12) définit un ou plusieurs tableaux masques $M_n$ (12) ayant des entrées $r_n[x]$ correspondant aux tableaux de substitution masqués de sorte que $r_n[x] = m \wedge r[x] \wedge r_1[x] \wedge ... \wedge r_{n-1}[x]$.

**11.** Un produit-programme sur dispositif de calcul tel que revendiqué dans la revendication 9 ou la revendication 10 pour le masquage des valeurs de sortie de tableaux d'une opération cryptographique AES, le moyen de création de code de programme comportant un opérateur de code de programme exécutant les premières étapes cryptographiques AES sur un ensemble de tableaux de substitution masqués (11) et exécutant les deuxièmes étapes cryptographiques AES sur un ensemble de tableaux masques (12), l'opérateur de code de programme combinant les valeurs résultant des premières et deuxièmes étapes cryptographiques AES pour produire les valeurs de sortie masquées.

**12.** Un produit-programme sur dispositif de calcul tel que revendiqué dans la revendication 9 ou la revendication 10 pour le masquage des valeurs de sortie de tableaux pour des opérations de cryptage DES, le moyen de création de code de programme comportant un opérateur de code de programme exécutant une première série d'étapes cryptographiques DES sur un ensemble de tableaux de substitution masqués (11) et exécutant une deuxième série d'étapes cryptographiques DES sur un ensemble de tableaux masques (12), les résultats intermédiaires des étapes de la première série et de la deuxième série d'étapes cryptographiques DES étant masqués par les résultats intermédiaires de l'étape correspondante dans l'autre série d'étapes cryptographiques DES afin d'être utilisés comme entrées pour les étapes ultérieures, le code de programme comportant un opérateur de code combinant les valeurs résultant de la première et de la deuxième série d'étapes cryptographiques DES pour produire les valeurs de sortie des tableaux masqués.

**13.** Un produit-programme sur dispositif de calcul tel que revendiqué dans les revendications 9 à 12 comportant en outre un opérateur de code de programme régénérant dynamiquement chaque tableau de substitution masqué (11) et chaque tableau masque (12) correspondants en, après qu'une valeur a été accédée, redéfinissant la valeur accédée dans lesdits tableaux (11, 12) en masquant la valeur dans chacun desdits tableaux (11, 12) à l'aide d'une valeur générée aléatoirement.

**14.** Un produit-programme sur dispositif de calcul tel que revendiqué dans la revendication 11 ou la revendication 12 dans lequel l'opérateur de code de programme pour définir les tableaux de substitution masqués (11) et les tableaux masques (12) est exécuté avant le téléchargement de code de programme pour l'exécution d'étapes cryptographiques supplémentaires.

for each *x* generate a
random value, *r[x]*

*m*

Original
Sbox
Table

Sbox masked
Table

Mask
Table

*x* → $S[x]$

$S'[x]$

$M[x]$

10

11

12

FIG. 1

FIG. 2

for each x generate a random value, r[x],
r1[x], r2[x],...rn-1[x]

Original
Sbox
Table

x → S(x)

r1[x]   r2[x]

m

S'(x) ← M1(x) ← M2(x) ← ooo   Mn(x) ←

Sbox masked     Mask      Mask            Mask
Table           Table 1   Table2          Table n

Fig. 3

Fig. 4

FIG. 5